# EUROPEAN PATENT SPECIFICATION

(11) **EP 0 559 031 B1**
(45) Date of publication and mention of the grant of the patent: **11.12.1996**
(21) Application number: 93102669.4
(22) Date of filing: 19.02.1993
(51) Int. Cl.: B44C 1/20, B44C 1/24, C08L 23/08, C09D 123/08

(54) **Decorative sheet and method of producing the same**
Dekorschicht und Verfahren zur deren Herstellung
Feuille décorative et sa méthode de fabrication

(30) Priority: 25.02.1992 JP 75225/92
(43) Date of publication of application: 08.09.1993
(73) Proprietor: ACHILLES CORPORATION, Tokyo (JP)
(72) Inventor: Handa, Koichi, Ashikaga-shi, Tochigi (JP)
(74) Representative: Laufhütte, Dieter, Dr.-Ing.

(56) References cited:
- EP-A- 0 075 646
- EP-A- 0 370 361
- Derwent Publications Ltd., London, GB; AN 87-294914 & JP-A-62 206 087 (NIPPON VILENE KK) 10 September 1987
- Derwent Publications Ltd., London, GB; AN 92-189736 & JP-A-4 126 239 (ACHILLES CORP) 27 April 1992
- Derwent Publications Ltd., London, GB; AN 87-166383 & JP-A-62 097 898 (YAMADA S.) 7 MAY 1987

## Description

### BACKGROUND OF THE INVENTION

### Field of the Invention

The present invention relates to a decorative sheet used for buildings (such as ceiling, wall, and floor materials), furniture, vehicles, bags, electric appliances, and shoes and, more particularly, to a decorative sheet in which a decorative layer is formed of a specific type of synthetic resin emulsion and a method of producing such a decorative sheet.

### Description of the Related Art

Conventionally, for this type of a decorative sheet, a decorative layer which is produced by such means as coating and printing a base of the layer with a foaming or non-foaming ethylene-vinyl acetate copolymer emulsion is used. Such a sheet is described, for example, in JP-A-62-97898.

However, such a type of sheet does not provide sufficient properties of embossing, anti-yellowing, coating and printability, and therefore, improvement thereof is in great demand.

### SUMMARY OF THE INVENTION

Accordingly, in response to such a demand, an object of the present invention is to provide a decorative sheet which possesses excellent properties, such as sharp and clear embossing, and anti-yellowing, and which also shows excellent properties of coating and printability.

Another object of the invention is to provide a decorative sheet which does not discharge poisonous gas when it is burned after use.

After the present inventor carried on research to achieve these objects, he discovered that, instead of using the above-mentioned ethylene-vinyl acetate copolymer emulsion, by using an emulsion mixture of an acrylic resin and an ethylene-vinyl acetate resin a good decorative layer can be easily formed, and more specifically, an embossed pattern in the decorative layer can be formed sharply and clearly by means of embossing, and furthermore, the emulsion has anti-yellowing characteristics and shows excellent properties of coating or printing on the base of the layer.

### DESCRIPTION OF THE PREFERRED EMBODIMENTS

Based on their discovery as stated above, a decorative sheet of the present invention is characterized in that its decorative layer is formed of emulsion containing an acrylic resin and an ethylene-vinyl acetate resin.

In the present invention, as an acrylic resin, a polymer of acrylic ester, methacrylic acid ester, acrylic acid, methacrylic acid, acrylamide, acrylonitrile and the like, or a copolymer of these compounds and the other kinds of monomers which are able to be copolymerized therewith may also be used individually or as a mixture of two or more kinds of polymers or copolymers.

Also, in the present invention, as an ethylene-vinyl acetate resin used together with the acrylic resin, a resin containing 5 - 95 % by weight, and more preferably, 50 - 90 % by weight, of ethylene is suitable.

A resin containing less than the above-mentioned percentage of ethylene (that is, the vinyl acetate contained in the resin is more than the above-mentioned percentage) might have reduced heat resistance and be subject to yellowing.

On the other hand, a resin containing more than the above-mentioned percentage of ethylene (that is, the vinyl acetate contained in the resin is less than the above-mentioned percentage) may have deteriorated foaming properties.

It is noted that such resins suitably proportioned as stated above may be used individually or as a mixture of two or more kinds of resins.

Such an acrylic resin, an ethylene-vinyl acetate resin, or a mixture of these resins as described above produces a sheet as a product in such a way that the sheet has a drier touch in the case where its glass transition point (hereinafter referred to as Tg point) is high, and that the sheet has a wetter touch in the case where its Tg point is low.

Therefore, a combination of resins having an appropriate Tg point may be selected and employed in accordance with the required touch for the sheet.

In the emulsion mixture containing an acrylic resin and an ethylene-vinyl acetate resin as stated above, the mixture ratio is preferably 20 - 80 % by weight of an acrylic resin and 80 - 20 % by weight of an ethylene-vinyl acetate resin, and more preferably, 30 - 50 % by weight of acrylic resin and 70 - 50 % by weight of an ethylene-vinyl acetate resin.

If an acrylic resin has less than the lower percentage described above relative to an ethylene-vinyl acetate resin mixed therewith, an emulsion which is obtained as a result cannot sufficiently exhibit properties such as embossing, anti-yellowing and foaming. On the other hand, if an acrylic resin has more than the higher percentage described above, the resulting decorative layer is considerably hard, which might cause cracks and chinks.

Thus, in the present invention, the foregoing mixture ratios are desirable.

The solid portion of the emulsion mixture is preferably not less than 30 % by weight, and more preferably, not less than 50 % by weight, because an emulsion mixture having lower proportion of solids than the above-mentioned percentage might not easily dry.

In the case where a decorative layer obtained by using the foregoing emulsion mixture is form a foam layer, foaming can be employed according to several methods, such as a mechanical foaming method, in which air is introduced to the emulsion by such means as mechanical stirring, and a chemical foaming method, in which an expanding agent, such as a microcapsule, containing a thermal-expanding agent or a thermal decomposition chemical foaming agent, is contained in the emulsion.

The amount of air which is introduced by employing the mechanical foaming method, or the mixture ratio of the emulsion and the expanding agent, such as the microcapsule or the thermal decomposition chemical foaming agent, which is achieved by employing the chemical foaming method, may be suitably adjusted according to the desired degree of foaming for the decorative layer of the sheet.

A microcapsule or a thermal decomposition chemical foaming agent which is generally used when each kind of a layer is foamed by emulsion, can be used.

Nevertheless, in the case where the mechanical foaming method is employed, air bubbles may burst in one big bubble during coating, and gas may escape outside during foaming, that is, the desired foaming may not be performed. Moreover, in the case where the thermal decomposition chemical foaming agent is employed, a foamed decorative sheet must be exposed under an atmosphere of a high temperature of more than 200°C in order to obtain an adequate expansion ratio. Consequently, the resin forming the decorative sheet might be thermally discolored, thereby causing yellowing.

Unlike the foregoing methods, the decorative layer obtained by employing a thermal expanding foaming agent which is represented by a microcapsule is preferable because the decorative layer can secure the adequate expansion ratio even at a temperature of between 140 - 200°C so that the yellowing can be avoided and uniform foaming can be obtained.

It is to be understood that the present invention is not limited to the exclusive use of the thermal expanding foaming agent, such as a microcapsule, but that it may be certainly used jointly with the thermal decomposition chemical foaming agent in accordance with the purposes.

Furthermore, in the present invention, on top of the microcapsule or the thermal decomposition chemical foaming agent, additives may be added to the emulsion mixture, such as a screen printability improving agent (which improves printability when the base [whose details will be described later] of the decorative sheet of the present invention is coated with the emulsion according to the present invention by utilizing the screen printing technique), a dry retardant (which prevents only a surface portion of the coated emulsion from drying sooner than the other portions, and thus prevents a "film" from being formed on the surface), a thickener, a filler, an anti-foaming agent, pigments, a flame retardant, and an anti-fungal agent.

In the case where screen printing is employed, a screen printability improving agent, such as emulsifying terpene (which is composed of terpene, water and an emulsifying agent) can be used. The mixture ratio is preferably such that between 15 - 50 parts, and more preferably, between 25 - 35 parts, by weight of the screen printability improving agent is mixed with 100 parts by weight of the emulsion mixture.

As a dry retardant, ethylene glycol, diethylene glycol, polyethylene glycol, which is preferably a liquid-type at ordinary temperature, or the like can be used.

The mixture ratio is preferably such that between 2 - 10 parts by weight of a dry retardant is mixed with 100 parts by weight of the emulsion mixture.

A thickener which is generally used for emulsion, such as, sodium polyacrylate, carboxymethyl cellulose (CMC), hydroxyethyl cellulose (HEC), can be used as a thickener.

A thickener is suitably proportioned so that the emulsion mixture can be adjusted to be thickened to a required degree.

A filler which is generally used for emulsion, such as, aluminum hydroxide, magnesium hydroxide, calcium carbonate, and magnesium carbonate can be used as a filler.

The mixture ratio of a filler is preferably such that between 0 - 50 parts, and more preferably, 10 - 40 parts, by weight of the filler is mixed with 100 parts by weight of the emulsion mixture.

An anti-foaming agent which is generally used for emulsion can be used as an anti-foaming agent. The mixture ratio is preferably such that between 0.01 - 1.5 parts by weight of the anti-foaming agent is mixed with 100 parts by weight of the emulsion mixture.

Both organic and inorganic pigments which are generally used for emulsion can be used as pigments. The mixture ratio can be suitably adjusted according to the desired colors of a decorative layer.

As a flame retardant, either a halogen flame retardant, such as phosphate ester halogenide, or a non-halogen flame retardant, such as antimony trioxide, zinc borate, magnesium tertiary phosphate, magnesium phosphite, guanidine sulfamate, thiourea, and guanidine phosphate can be used, but non-halogen flame retardant is more preferable.

As an anti-fungal agent, an organic anti-fungal agent, such as 10, 10'-oxybisphenoxyarsine, N-(fluorodichloromethylthio)-phthalimide, 2-(4-thiazole) benzimidazole, N-trichloromethylmercapto-4-cyclohexane-1, 2-dicarboxyimido, 2, 4, 5, 6-tetrachloroisophthalonitrile, or an inorganic anti-fungal agent, such as barium metaborate can be used.

As a base forming the decorative layer obtained by the emulsion mixture, a base which is generally used for a conventional synthetic resin sheet can be used, such as a paper, a synthetic resin sheet, woven fabric, non-woven fabric and knit fabric.

When a base is formed of a paper which is made of ordinary pulp, the paper absorbs water in the emulsion and thus it is inconsistently expanded and the fabric forming the paper is inconsistently contracted, which most likely will result in producing "cockling" over the decorative sheet.

In this case, it is preferable that the technique disclosed in the Japanese Patent Application No. 2-248082 proposed by the present inventor is applied to such a paper, and that a coating layer which is mainly composed of inorganic powders is used at least on the surface of the paper, on which surface a decorative layer is formed.

As the inorganic powders as stated above, aluminium hydroxide, magnesium hydroxide, titanium oxide, silicon dioxide, aluminium silicate, magnesium silicate, calcium carbonate, zinc oxide, barium sulfate, talc, kaolin, clay, or the like can be used.

These inorganic powders are prepared for use as coating materials by a binder, such as casein and starch; or a synthetic resin, such as an acrylic resin, a vinyl chloride resin, a polyvinyl acetate resin, ethylene-vinyl acetate copolymer resin, styrene-butadiene rubber (SBR), polyvinyl alcohol (PVA), and melamine resin.

The coating material may be either of an emulsion type or a solvent type, but an emulsion type is more preferable for preventing atmospheric (air) pollution.

Ordinary coating means for coating a paper with the foregoing coating materials, such as a doctor knife coater, a roll coater and an air knife coater, are employed. In regard to when the coating should be performed, the coating may be performed immediately after paper-making, or after paper-making separated by another process, or immediately before the decorative layer is formed (provided that the decorative layer is formed after the coating layer has dried).

Likewise, in order to form the decorative layer obtained by the emulsion mixture, printing means, such as gravure printing and rotary screen printing, may be employed as alternative to the ordinary coating means, such as a doctor knife coater, a roll coater and an air knife coater, used for forming a coating layer which is mainly composed of the inorganic powders on the paper.

When such means as gravure printing and rotary printing are employed, a decorative layer can be formed to partially or wholly cover the base.

Such a layer obtained by the emulsion mixture, which layer is coated and printed according to the methods as described above, dries to form a decorative layer. It dries suitably when dried for approximately between 10 seconds and 5 minutes at a temperature of between 100 - 130°C. Furthermore, it is possible to print a pattern layer on the decorative layer when the need arises.

When the decorative layer is formed to be a foamed layer by means of the foregoing chemical foaming method, it is further treated by heat after it dries under the conditions suited for foaming materials which will be used.

For example, in the case where a microcapsule is mixed in the layer, the layer needs to be maintained at a temperature of between 160 - 190°C for between approximately 30 - 90 seconds; and in the case where a thermal decomposition chemical foaming agent is mixed in the layer, an appropriate temperature and period of time is needed for the foaming agent to decompose.

The decorative layer may be either single layered or multilayered. In the case where the decorative layer is multilayered, a combination of a foamed layer and a non-foamed layer may also be used.

Various kinds of treatments for the surface of the resulting decorative layer may also be performed when the need arises, such as for adjusting lustering such as matting and glossing, or for providing anti-fouling properties, or for reinforcing the strength of the surface.

These treatments are performed by forming a surface treatment layer, which is obtained by coating it with a surface treatment agent and by drying it, or by laminating various kinds of films.

As a surface treatment agent, either a water-type which is mainly composed of an acrylic resin or an urethane resin, or a solvent type may be used, but a water type is more preferable for preventing atmospheric (air) pollution.

As a film which is laminated, a film which is composed of any resin, except vinyl chloride resin can be used, such as an acrylic resin film, a polyester resin film, an olefin resin film (including films such as ethylene-vinyl acetate copolymer film and ethylene-vinyl alcohol copolymer film), and a fluorine resin film.

A laminate may be a thermal laminate type without an adhesive or an adhesive laminate type with an adhesive.

As an adhesive which is used for the adhesive laminate type, a certain adhesive, such as an acrylic adhesive and an urethane adhesive, which may be a water-type adhesive or a solvent-type adhesive, can be used. It is preferable to use an adhesive having compatibility with a resin which forms a film.

An adhesive is preferably coated on the film which is laminated and adhered to the layer.

The film may be laminated prior to embossing by means of a mechanical method which will be described later, or may be laminated simultaneously with embossing.

The film having a thickness of 10 - 100 µm, and more preferably, 10 - 50 µm, can be used as a film which is laminated.

The film having a thickness of less than 10 µm is not desirable because it is so thin that operational performance deteriorates and wrinkles are easily produced during laminating. Conversely, a film having a thickness of more than 100 µm is also undesirable because it is so thick that it is too costly to produce.

Moreover, an embossed design can be obtained by means of embossing by utilizing the above-mentioned mechanical foaming method and the chemical foaming method simultaneously with forming the decorative layer. It may also be obtained by employing mechanical embossing means, such as an embossing roll, after the decorative layer is formed.

As will be understood from the foregoing description, the present invention produces the following operations due to synergism of an acrylic resin (or an acrylic emulsion) and an ethylene-vinyl acetate resin (or ethylene-vinyl acetate emulsion).
(1) The present invention shows good embossing properties so that an embossed pattern can be formed sharply and clearly by embossing.
(2) The present invention shows good film (layer) forming properties (coating or printability) so that an excellent decorative layer without defects, such as blurring, can be easily formed.
(3) The present invention shows excellent anti-yellowing properties so that the coloring of pigments produces a good effect.
(4) The present invention shows sufficient flexibility.
(5) Due to these properties as described in (1) - (4), the present invention can be used as wall paper and various other kinds of decorative sheets adequately suited for practical use.

Examples of the present invention will be described hereinafter. However, the present invention is not limited to the below-described examples.

### Example 1

The mixture of the components as shown in Table 1 was achieved by stirring in a mixer. Foams produced by air which was introduced during stirring was deaerated. The thermally-expansive emulsion mixture was prepared.

**[Table 1]**

| | (parts by weight) |
|---|---|
| acrylic ester-methyl methacrylate copolymer/ethylene-vinyl acetate copolymer (which containing 70 % by weight of ethylene) emulsion (acrylic ester-methyl methacrylate copolymer/ethylene-vinyl acetate copolymer = 40/60 % by weight, 55 % by weight of solids) | 100 |
| ethylene glycol (dry retardant) | 5 |
| sodium polyacrylate (thickener) | 2 |
| aluminium hydroxide (filler) | 15 |
| mineral oil type anti-foaming agent | 0.75 |
| microcapsule (brand "Microcapsule F-85" made in Matsumoto Yushi-Seiyaku Co.,Ltd.) | 7.5 |
| Pigments | suitable amount |

The above-described thermally-expansive mixed emulsion was coated on the surface on which a decorative layer would be formed (that is, on the surface on which a layer mainly composed of inorganic powders was formed) of a paper having 100g/m2 of a basic weight (a brand "TT-100C" made by Tokushu Paper Mfg.Co.,Ltd.) by a doctor knife so that the thickness of the layer would be 0.1 mm after drying. Then, the paper dried by heat at a temperature of 130°C for 2 minutes. Thus, the expansive decorative layer was formed.

Then, the decorative layer was treated thermally at a temperature of 180°C for 70 seconds and the microcapsule contained in the decorative layer was expanded to form a foamed layer. Immediately after the thermal treatment, an embossed pattern was formed on the layer by a cold embossing roll. Thus, the sheet of the present invention was obtained.

The sheet of the present invention obtained in Example 1 was preferable as wall paper for the following reasons: an expansion ratio of 4.5, no thermal discoloring, a sharp and clear embossed pattern, a dry touch of the surface, and adequate flexibility of the decorative layer.

### Example 2

After an expansive decorative layer was formed under the same conditions as those in Example 1, it was treated by heat at a temperature of 180°C for 70 seconds, thereby expanding a microcapsule contained in the decorative layer. Ethylene-vinyl alcohol copolymer film (using a brand "Eval" made by Kuraray Co.,Ltd.) having a 15µm thick was thermally laminated conveying on a cold embossing roll by means of the embossing roll and a back-up roll and, at the same time, an embossed pattern was formed on the layer by embossing.

The sheet of the present invention obtained in Example 2 was preferable as wall paper for substantially the same reasons as those of the sheet obtained in Example 1, that is, substantially the same expansion ratio as that in Example 1, no thermal discoloring, a sharper and clearer embossed pattern, a dry touch of the surface, and adequate flexibility of the decorative layer. It was even more preferable as wall paper than the sheet of the present invention obtained in Example 1 because it was also excellent in properties such as anti-scratching, durability and anti-fouling since a surface treatment layer laminated by a film was formed.

### Example 3

An expansive decorative layer was formed under the same conditions as those in Example 1, except the mixture ratio of ethylene and vinyl acetate in the components mixture was changed as shown in Table 1 of Embodiment 1 as follows. Acrylic ester-methyl methacrylate copolymer/ethylene-vinyl acetate copolymer (which contains 70 % by weight of ethylene) emulsion was changed to acrylic ester-methyl methacrylate copolymer/ethylene-vinyl acetate copolymer=30/70 % by weight and 55 % by weight of solids. Further, the thermally-expansive emulsion mixture was coated on the surface of a paper by a doctor knife so that the thickness of the layer would be 0.12 mm after drying.

An acrylic surface treatment agent was coated on the surface of the decorative layer by a gravure coater so that the thickness of the layer would be 3µm on average after drying, and the layer dried at a temperature 130°C for 1 minute.

Then, under the same conditions as those in Example 1, the layer was treated by heat, thereby expanding a microcapsule contained in the decorative layer, and an embossed pattern was formed by embossing. Thus, another sheet of the present invention was obtained.

The sheet of the present invention obtained in Example 3 was preferable as wall paper for substantially the same reasons as those of the sheet obtained in Example 1, that is, it had an expansion ratio of 4.5, no thermal discoloring, a sharp and clear embossed pattern, a dry touch of the surface, and adequate flexibility of the decorative layer. It was even more preferable than the sheet of the present invention obtained in Example 1 because it was also excellent in properties such as anti-scratching and anti-fouling since a surface treatment layer was formed.

### Comparative Example

A thermally-expansive emulsion was prepared under the same conditions as those in Example 1 except for the components to be changed as shown in Table 2.

**[Table 2]**

| | (parts by weight) |
|---|---|
| ethylene-vinyl acetate copolymer (which contains 70 % by weight of ethylene) emulsion (52 % by weight of solids) | 100 |
| ethylene glycol (dry retardant) | 5 |
| sodium polyacrylate (thickener) | 2 |
| aluminium hydroxide (filler) | 15 |
| mineral oil type anti-foaming agent | 0.75 |
| microcapsule (brand "Microcapsule F-85" made by Matsumoto Yushi-Seiyaku Co.,Ltd.) | 7.5 |
| Pigments | suitable amount |

An expansive decorative layer was formed under the same conditions as those in Example 1 except for the following conditions: the emulsion composed of the components as shown in Table 2 would be used, and the emulsion was coated by a doctor knife so that the thickness of the layer would be 0.12 mm after drying.

Then, the decorative layer was treated thermally at a temperature of 180°C for 70 seconds and the microcapsule contained in the decorative layer was expanded. Immediately after the thermal treatment, an embossed pattern was formed on the layer by a cold embossing roll. Thus, a comparative sheet was obtained.

Although the decorative layer was sufficiently flexible, the resulting comparative sheet did not live up to a high quality standard as wallpaper for the following reasons: the expansion ratio was 4, which was less than that of the sheets according to the present invention obtained in Examples 1 and 2; thermal yellowing was recognized; the embossed pattern was not formed sharply and clearly; and the surface of the layer had a rather wetter touch (stickness). Thus the comparative sheet was not preferable.

According to the foregoing description, the present invention offers the following advantages.

Since the present invention is obtained by using an emulsion mixture, it shows excellent properties such as good embossing, a film (layer) forming (coating and printability), and foaming. It also takes the form of a sharp and clear embossed pattern by embossing and of a good decorative layer, and it is further excellent in flexibility.

Since the decorative layer obtained by the emulsion mixture shows excellent anti-yellowing properties, the coloring of pigments produces a good effect, thus providing extremely effective wall paper and other kinds of decorative sheets for practical use.

## Claims

1. A decorative sheet characterized by comprising a decorative Layer which is obtained from an emulsion containing an acrylic resin and an ethylene-vinyl acetate resin.

2. A decorative sheet characterized by comprising a decorative layer which is obtained from an emulsion containing an acrylic resin and an ethylene-vinyl acetate resin together with an expanding agent.

3. A decorative sheet as defined in claims 1 and 2, wherein said acrylic resin is at least one type selected from a group consisting of a polymer of acrylic ester, methacrylic acid ester, acrylic acid, methacrylic acid, acrylamide and acrylic nitrile, and a copolymer of these monomers and the other kinds of monomers which are able to be copolymerized therewith.

4. A decorative sheet as defined in claims 1-3, wherein said ethylene-vinyl acetate resin contains 5-95 % by weight of ethylene.

5. A decorative sheet as defined in claims 1 and 2, wherein said emulsion containing said acrylic resin and said ethylene-vinyl acetate resin, the mixture ratio of said acrylic resin and said ethylene-vinyl acetate resin is 20-80 % by weight of said acrylic resin and 80-20 % by weight of said ethylene-vinyl acetate resin.

6. A decorative sheet as defined in claims 2-5, wherein said expanding agent is microcapsule containing a thermally-expanding agent.

7. A decorative sheet as defined in claims 1-6, characterized in that a coating layer which is mainly composed of inorganic powders is formed between a base and said decorative layer.

8. A decorative sheet as defined in claims 1-7, characterized in that a surface treatment layer is formed on said decorative layer.

9. A decorative sheet as defined in claim 8, wherein said surface treatment layer is a film laminated layer.

10. A decorative sheet as defined in claim 9, wherein said film laminated layer comprises an acrylic resin film, a polyester resin film, an olefin resin film and a fluorine resin film.

11. A decorative sheet as defined in claim 8, wherein said surface treatment layer is formed from a surface treatment agent.

12. A decorative sheet as defined in claim 11, wherein said suface treatment agent is mainly composed of an acrylic resin or an urethane resin.

13. A method of producing a decorative sheet characterized by comprising the steps of: coating or printing a base material with an emulsion composition which is composed of an emulsion containing an acrylic resin and an ethylene-vinyl acetate resin together with an expanding agent, followed by heat foaming after drying thereof.

14. A method of producing a decorative sheet as defined in claim 13, characterized in which the coating or printing layer is further embossed after heat foaming thereof.

15. A method of producing a decorative sheet as defined in claim 13 and 14, characterized in which a pattern layer is printed thereon prior to heat foaming.

16. A method of producing a decorative sheet as defined in claims 13 and 14, characterized in that prior to coating said base with said emulsion composition, a coating material including inorganic powders is coated by said coating method and dried.

17. A method of producing a decorative sheet as defined in claim 15, wherein said emulsion composition includes an expanding agent, and wherein said expanding agent foams the surface by heat after the surface treatment was performed.

18. A method of producing a decorative sheet as defined in claim 15, wherein one of said emulsion compositions includes an expanding agent and the other of said emulsion compositions does not include an expanding agent.

## Patentansprüche

1. Dekorfolie, dadurch gekennzeichnet, daß sie eine Dekorschicht umfaßt, welche aus einer Emulsion eines Acrylharzes und eines Ethylen-Vinylacetatharzes besteht.

2. Dekorfolie, dadurch gekennzeichnet, daß sie eine Dekorschicht umfaßt, welche aus einer Emulsion eines Acrylharzes und eines Ethylen-Vinylacetatharzes in Verbindung mit einem Treibmittel besteht.

3. Dekorfolie nach Ansprüchen 1 und 2, worin dieses Acrylharz mindestens eine Art ist, gewählt aus einer Gruppe, bestehend aus einem Polymer von Acrylester, Methacrylsäureester, Acrylsäure, Methacrylsäure, Acrylamid und Acrylnitril, und einem Copolymer dieser Monomeren und den anderen Monomerarten, die damit copolymerisierbar sind.

4. Dekorfolie nach Ansprüchen 1-3, worin das Ethylen-Vinylacetatharz 5-95 Gew.-% an Ethylen enthält.

5. Dekorfolie nach Ansprüchen 1 und 2, worin das Mischungsverhältnis bei der Emulsion, bestehend aus Acrylharz und Ethylen-Vinylacetatharz, von Acrylharz zu Ethylen-Vinylacetatharz 20-80 Gew.-% an Acrylharz zu 80-20 Gew.-% an Ethylen-Vinylacetatharz beträgt.

6. Dekorfolie nach Ansprüchen 2-5, worin das Treibmittel eine Mikrokapsel ist, die ein Wärmetreibmittel enthält.

7. Dekorfolie nach Ansprüchen 1-6, dadurch gekennzeichnet, daß eine Überzugsschicht, die sich hauptsächlich aus anorganischen Pulvern zusammensetzt, zwischen einer Basis und der Dekorschicht gebildet wird.

8. Dekorfolie nach Ansprüchen 1-7, dadurch gekennzeichnet, daß eine Oberflächenbehandlungsschicht auf der Dekorschicht gebildet wird.

9. Dekorfolie nach Anspruch 8, worin die Oberflächenbehandlungsschicht eine aufkaschierte Filmschicht ist.

10. Dekorfolie nach Anspruch 9, worin die aufkaschierte Filmschicht einen Acrylharzfilm, einen Polyesterharzfilm, einen Olefinharzfilm und einen Fluorharzfilm umfaßt.

11. Dekorfolie nach Anspruch 8, worin die Oberflächenbehandlungsschicht aus einem Oberflächenbehandlungsmittel gebildet wird.

12. Dekorfolie nach Anspruch 11, worin das Oberflächenbehandlungsmittel hauptsächlich aus einem Acrylharz oder einem Urethanharz besteht.

13. Verfahren zur Herstellung einer Dekorfolie, dadurch gekennzeichnet, daß es folgende Schritte umfaßt: Überziehen oder Bedrucken eines Basismaterials mit einer Emulsionszusammensetzung, die aus einer Emulsion eines Acrylharzes und eines Ethylen-Vinylacetatharzes in Verbindung mit einem Treibmittel besteht, gefolgt von Wärmeschäumen nach derren Antrocknen.

14. Verfahren zur Herstellung einer Dekorfolie nach Anspruch 13, dadurch gekennzeichnet, daß die Überzugs- oder Druckschicht nach deren Wärmeschäumung außerdem geprägt wird.

15. Verfahren zur Herstellung einer Dekorfolie nach Anspruch 13 oder 14, dadurch gekennzeichnet, daß vor der Wärmeschäumung eine Musterschicht darauf gedruckt wird.

16. Verfahren zur Herstellung einer Dekorfolie nach Anspruch 13 oder 14, dadurch gekennzeichnet, daß vor dem Überziehen der Basis mit der Emulsionszusammensetzung, ein Beschichtungsmaterial, das anorganische Pulver enthält, mittels dieses Beschichtungsverfahrens beschichtet und getrocknet wird.

17. Verfahren zur Herstellung einer Dekorfolie nach Anspruch 15, worin die Emulsionszusammensetzung ein Treibmittel enthält, und worin das Treibmittel die Oberfläche mittels Wärme aufschäumt, nachdem die Oberflächenbehandlung vorgenommen wurde.

18. Verfahren zur Herstellung einer Dekorfolie nach Anspruch 15, worin eine dieser Emulsionszusammensetzungen ein Treibmittel enthält und die andere dieser Emulsionszusammensetzungen kein Treibmittel enthält.

## Revendications

1. Feuille décorative, caractérisée en ce qu'elle comporte une couche décorative qui est obtenue à partir d'une émulsion contenant une résine acrylique et une résine d'acétate d'éthyléne-vinyle.

2. Feuille décorative, caractérisée en ce qu'elle comporte une couche décorative qui est obtenue à partir d'une émulsion contenant une résine acrylique et une résine d'acétate d'éthylène-vinyle ensemble avec un agent expansif.

3. Feuille décorative selon les revendications 1 et 2, dans laquelle ladite résine acrylique est au moins un type sélectionné à partir d'un groupe consistant en un polymère d'ester acrylique, d'ester d'acide métacrylique, d'acide acrylique, d'acide métacrylique, d'acrylamide et de nitrile acrylique, et un copolymère de ces monomères et les autres genres de monomères qui se prêtent à être co-polymérisés avec eux.

4. Feuille décorative selon les revendications 1 à 3, dans laquelle ladite résine d'acétate d'éthylène-vinyle comporte 5 à 95 % en poids d'éthylène.

5. Feuille décorative selon les revendications 1 et 2, dans laquelle dans ladite émulsion contenant ladite résine acrylique et ladite résine d'acétate d'éthylène-vinyle, le rapport de mélange de ladite résine acrylique et de ladite résine d'acétate d'éthylène-vinyle est de 20 à 80 % en poids de ladite résine acrylique et de 80 à 20 % en poids de ladite résine d'acétate d'éthylène-vinyle.

6. Feuille décorative selon les revendications 2 à 5, dans laquelle ledit agent expansif est une microcapsule contenant un agent thermo-expansif.

7. Feuille décorative selon les revendications 1 à 6, caractérisée en ce qu'une couche d'enduit qui est principalement composée de poudres inorganiques est formée entre une base et ladite couche décorative.

8. Feuille décorative selon les revendications 1 à 7, caractérisée en ce qu'une couche de traitement de surface est formée sur ladite couche décorative.

9. Feuille décorative selon la revendication 8, dans laquelle ladite couche de traitement de surface est une couche de film laminé.

10. Feuille décorative selon la revendication 9, dans laquelle ladite couche de film laminé comporte un film de résine acrylique, un film de résine de polyester, un film de résine d'oléfine et un film de résine de fluor.

11. Feuille décorative selon la revendication 8, dans laquelle ladite couche de traitement de surface est formée à partir d'un agent de traitement de surface.

12. Feuille décorative selon la revendication 11, dans laquelle ledit agent de traitement de surface est principalement composé d'une résine acrylique ou d'une résine d'uréthane.

13. Méthode de fabrication d'une feuille décorative, caractérisée en ce qu'elle comporte les étapes : enduire ou imprimer un matériau de base au moyen d'une composition d'émulsion qui est composée d'une émulsion comportant une résine acrylique et une résine d'acétate d'éthylène-vinyle, ensemble avec un agent expansif, suivi d'un moussage à la chaleur après son séchage.

14. Méthode de fabrication d'une feuille décorative selon la revendication 13, caractérisée en ce que la couche d'enduit ou d'impression est ensuite gaufrée après son moussage à la chaleur.

15. Méthode de fabrication d'une feuille décorative selon les revendications 13 et 14, caractérisée en ce qu'une couche formant un dessin est imprimée sur elle avant le moussage à la chaleur.

16. Méthode de fabrication d'une feuille décorative selon les revendications 13 et 14, caractérisée en ce qu'avant l'enduction de ladite base au moyen de la composition d'émulsion, un matériau d'enduction comportant des poudres inorganiques est appliqué par ladite méthode d'enduction et séché.

17. Méthode de fabrication d'une feuille décorative selon la revendication 15, dans laquelle ladite composition d'émulsion comporte un agent expansif, et dans laquelle ledit agent expansif mousse la surface par la chaleur après que le traitement de surface a été achevé.

18. Méthode de fabrication d'une feuille décorative selon la revendication 15, dans laquelle, une desdites compositions d'émulsion comporte un agent expansif et l'autre desdites compositions d'émulsion ne comporte pas d'agent expansif.
